# FASCICULE DE BREVET EUROPEEN

(11) **EP 1 466 141 B1**
(45) Date de publication et mention de la délivrance du brevet: **27.10.2010**
(21) Numéro de dépôt: 02793048.6
(22) Date de dépôt: 17.12.2002
(51) Int. Cl.: G01C 21/34

(54) **PROCEDE ET SYSTEME DE DETERMINATION DE L'ITINERAIRE EMPRUNTE PAR UN VEHICULE**
VERFAHREN UND SYSTEM ZUR ERMITTLUNG DER DURCH EIN FAHRZEUG ZURÜCKGELEGTEN WEGSTRECKE
ROUTE DETERMINATION METHOD AND DEVICE

(30) Priorité: 17.12.2001 FR 0116627
(43) Date de publication de la demande: 13.10.2004
(73) Titulaire: Société de Technologie Michelin, 63000 Clermont-Ferrand (FR)
(72) Inventeur: HAYOT, Pierre, F-92140 Clamart (FR); RAYNAUD, Michel, F-94120 Fontenay-sous-Bois (FR)
(74) Mandataire: Dequire, Philippe Jean-Marie Denis
(86) Numéro de dépôt international: PCT/EP2002/014396
(87) Numéro de publication internationale: WO 2003/052351

(56) Documents cités:
- EP-A- 0 785 535
- WO-A-01/65518
- DE-A- 19 908 941
- US-B1- 6 202 022
- US-B1- 6 298 303

## Description

La présente invention concerne une méthode de détermination d'itinéraires permettant d'optimiser l'établissement des parcours et/ou de leur représentation sous forme d'instructions grâce à l'utilisation de plusieurs sources de références.

Diverses méthodes de détermination d'itinéraires ainsi que plusieurs types de dispositifs associés sont aujourd'hui bien connus. Deux types de technologies complémentaires ont permis une très grande diffusion de ces outils. Tout d'abord, les dispositifs de type embarqués, permettant à un conducteur de diriger son véhicule à un endroit donné en suivant les indications illustrées à l'écran. De tels dispositifs sont souvent associés à des appareils GPS, permettant en plus de localiser plus ou moins précisément le véhicule, et de compléter l'itinéraire depuis ce point. Des versions existent également pour utilisation sur un ordinateur personnel.

D'autre part, les dispositifs centralisés, permettent d'offrir à une pluralité d'utilisateurs potentiels, des possibilités souvent vastes et variées, accessibles par exemple par l'entremise d'un réseau tel internet. Les dispositifs centralisés présentent l'avantage d'un coût d'utilisation minime pour chacun des utilisateurs, avec des possibilités de mises à jour des données régulières (sans coût supplémentaire pour l'utilisateur). En plus de la détermination d'itinéraires, les fournisseurs offrent souvent en plus, des services connexes, tels les prévisions/recommandations de circulation, des informations touristiques, etc.

Depuis que ces types de services existent, l'offre ne cesse de s'élargir, mais la plupart du temps, les améliorations concernent les aspects connexes, et non pas la technologie permettant la détermination des itinéraires en tant que tel. La puissance sans cesse grandissante des matériels a permis des progrès considérables pour optimiser le temps de travail, agrémenter la présentation des résultats, etc. Les principes de détermination d'itinéraires ont, pour leur part, moins évolué et comportent de ce fait un certain nombre de limitations qui risquent parfois d'affecter la qualité des itinéraires produits. Par exemple, les méthodes et dispositifs de type connus, utilisent une source unique de données géographiques pour établir un itinéraire. En fonction de la densité, de la qualité, et de la fréquence de mise à jour des informations de cette source, on peut établir des itinéraires de plus ou moins grande précision, avec un degré de fiabilité variable.

Par exemple, une proportion importante des itinéraires à déterminer comportent un point de départ dans une zone urbaine donnée avec un trajet urbain dans cette zone, une portion d'itinéraire en zone interurbaine, et un point d'arrivée à nouveau en zone urbaine. Si on détermine un tel itinéraire avec une seule source de données, on utilisera par défaut une source de type « grande échelle », afin d'obtenir la précision nécessaire en zone urbaine. Si l'itinéraire est donné sous forme d'une liste d'instructions, la portion de trajet urbain pourra être bien détaillée, en précisant par exemple à quel moment tourner à gauche ou à droite, sur quelle distance on conserve la même route, etc.

Une telle précision n'est ni requise ni même souhaitable pour un itinéraire en zone interurbaine. En effet, lors de la conduite sur une voie rapide telle une route nationale ou une autoroute par exemple, le conducteur est plus apte à réagir à des instructions prenant la forme de routes à prendre, de directions à suivre, etc. Il est en effet difficile de réagir, à haute vitesse, et/ou sur de grands trajets, à des instructions du type « tournez à gauche, roulez 100 m et tournez à droite ». Or, de telles instructions sont typiques d'une source correspondant à une carte à grande échelle, ce qui correspond en général à une zone urbaine, riche en détails de toutes sortes.

De même, si l'itinéraire est indiqué sous forme d'un tracé sur une carte, il est également difficile de se repérer si trop de détails inutiles apparaissent. Enfin, la feuille de route fournie est plutôt longue, rendant son utilisation difficile.

Pour pallier ces inconvénients, on utilise souvent des méthodes de détermination d'itinéraires comportant des étapes de concaténation ou de simplification, visant à présenter à l'utilisateur, moins de détails superflus, afin de rendre l'itinéraire plus facilement compréhensible. De telles méthodes ne donnent cependant pas toujours entière satisfaction.

Par conséquent, la présente invention prévoit une méthode de calcul d'itinéraire permettant d'établir à l'aide d'un calculateur un itinéraire optimisé en fonction d'au moins un critère CO entre un point alpha et un second pointe bêta, consistant à utiliser les données numérisées, notamment géographiques, d'au moins une première et une deuxième sources stockées sur au moins un support mémoire et comportant un ensemble de noeuds communs, la deuxième source étant distincte de la première par au moins une caractéristique K et consistant à :
a) déterminer, à partir du point alpha et à partir de ladite première source, une pluralité de noeuds alpha (Nα), sensiblement voisins dudit point alpha, référencés à la fois dans la première et dans la deuxième sources, et déterminer une première cote d'optimisation pour chacun des noeuds en fonction des données de la première source et d'un critère CO donné ;
b) déterminer, à partir du point bêta et à partir d'une troisième source, une pluralité de noeuds bêta (Nβ), sensiblement voisins dudit point bêta, référencés à la fois dans la troisième et dans la deuxième sources et déterminer une cote première d'optimisation pour chacun des noeuds, en fonction des données de la troisième source et d'un critère CO donné ;
c) déterminer, à partir des données de la deuxième source et d'un critère CO donné, pour l'ensemble des couples de noeuds Nα et de noeuds Nβ, une seconde cote d'optimisation de chacun des couples de noeuds ( Nα, Nβ) ;
d) déterminer, pour l'ensemble de l'itinéraire alpha-bêta, les noeuds optimum permettant d'optimiser un itinéraire global du point alpha au point bêta.

L'ordre dans lequel ces différentes étapes sont réalisées peut varier selon le mode de réalisation.

La caractéristique K de distinction des sources est de préférence fonction des informations contenues dans chacune des sources (comme par exemple une échelle différente de l'échelle de la première source, une base de données de format différent du format de la première source, etc). Ainsi, par exemple, la première source peut être de type urbaine, et/ou la deuxième source peut être de type interurbaine, et/ou la troisième source peut être de type urbaine.

Une telle configuration permet à la fois une réelle optimisation de l'établissement des itinéraires et une présentation claire, précise et logique du résultat. Ainsi par exemple, dans le cas d'un itinéraire comportant des portions de trajet urbain et des portions de trajet interurbain, la méthode selon l'invention permet de se référer à une source optimale pour chacune des portions du trajet. Ainsi, on peut par exemple se référer à une source à haute densité, donc comportant beaucoup de détails, pour une portion de trajet urbain. Dès qu'on change de type d'environnement et que l'on passe pour cet exemple à une portion de trajet interurbain, on se réfère à une autre source, ou à une source complémentaire à la première. On se réfère par exemple à une source de type « petite échelle », typique pour établir des itinéraires sur de long trajets interurbains. Seuls les détails essentiels apparaissent. Les instructions données à l'utilisateur (souvent le conducteur d'un véhicule) sont simples et dépouillées de détails risquant de porter à confusion. Lorsqu'il s'agit d'instructions écrites ou codées, il est aisé d'adapter le type d'instruction au type de trajet. Par exemple, en ville, avec des indications détaillées sur le chemin à suivre telles que « tourner à gauche, avancer de 320 m, puis tourner à droite, ...». Sur autoroute, ou voie rapide, avec des indications du type «prendre la route # 260a, en suivant la direction de ABC». La feuille de route résultante est donc sensiblement concise, notamment en ce qui concerne la portion de trajet interurbain.

D'autre part, l'utilisation des sources d'origines et/ou de types différents, peut permettre d'effectuer les opérations en utilisant les données de chaque source qui soient les plus appropriées selon le cas, par exemple les données les plus précises, les plus à jour, les plus fiables, les données de meilleure qualité, etc. Notons par ailleurs qu'il devient possible de traiter, ou maintenir les différentes sources utilisées de façon autonomes, par exemple en visant une complémentarité. Ainsi, on peut par exemple concentrer ou maximiser les efforts de maintenance et de mise à jour pour une source qui dispose de données sur le réseau routier principal; drainant une proportion majeure du trafic.

On peut également plus facilement prévoir des itinéraires complets, c'est-à-dire sans laisser une ou plusieurs portions de trajet non renseignées, ou non traitées. Si on dispose d'une source dont les données concernent les centres urbains, sans les liens entre ces centres, on peut, grâce à l'invention, se référer à une deuxième source permettant de raccorder les centres, et donc de dresser un itinéraire complet, de centre à centre.

Le fait de pouvoir utiliser des sources bien adaptées à chaque portion différente d'un itinéraire donné permet des gains importants dans la simplification du procédé. Contrairement à certaines techniques actuelles où l'on établit des itinéraires complexes à partir de sources uniques complexes et denses, pour, en fin de procédé, simplifier le résultat obtenu afin de la rendre plus pratique et convivial, la méthode selon l'invention permet de faire en sorte que la simplification soit faite à la base, c'est-à-dire intégrée dans la source utilisée. Cela se concrétise par exemple en évitant, pour une portion de trajet donnée, de se référer inutilement à une source trop complexe ou trop détaillée.

Dans ladite méthode, les étapes c et d sont, de manière préférentielle, successivement réalisées une fois les étapes a et b complétées.

De manière avantageuse, la première source est de type urbaine, la deuxième source de type interurbaine, et la troisième source de type urbaine. Les premières et secondes cotes d'optimisation desdits noeuds (Nα, Nβ) sont de préférence déterminées à partir d'un algorithme dérivé de DIJKSTRA.

Selon un exemple de réalisation avantageux, le point alpha est par exemple le point de départ de l'itinéraire, et/ou le point bêta peut être par exemple le point d'arrivée de l'itinéraire. De manière avantageuse, la troisième source correspond sensiblement à la première source, ou encore la troisième source correspond sensiblement à un secteur limité de la première source.

Selon un mode de réalisation avantageux, ledit ensemble de noeuds communs résulte d'une étape antérieure d'appariement, dans laquelle certains noeuds identifiés dans plus d'une source ont été associés entre eux.

Selon un exemple de réalisation avantageux, le noeud alpha correspond au point alpha. Selon un autre exemple de réalisation avantageux, le noeud bêta correspond au point bêta.

Selon diverses variantes, l'algorithme de DIJKSTRA est perfectionné ou simplifié ou optimisé en intégrant d'autres éléments techniques tels ceux développés par GONDRAN et MINOUX.

La cote d'optimisation CO d'un noeud ou d'un itinéraire est avantageusement établie en fonction d'au moins un critère CRI. Les critères CRI peuvent être pré-établis, ou à sélectionner par l'utilisateur parmi une liste pré-établie, ou définis par l'utilisateur. Les données concernant l'itinéraire établi sont avantageusement présentées à un utilisateur sous la forme d'une liste d'instructions codées, notamment écrites. Selon une variante de réalisation, les données concernant l'itinéraire établi sont présentées à un utilisateur sous la forme d'une représentation géographique, notamment une carte routière, sur laquelle l'itinéraire est mis en évidence.

La présente invention prévoit également un dispositif pour la mise en oeuvre de la méthode préalablement présentée, comportant :
- au moins une unité de stockage, permettant d'accéder aux données de la première et de la seconde source ;
- au moins une unité de calcul, permettant l'élaboration d'un itinéraire optimisé ;
- au moins un moyen d'affichage, permettant de présenter à l'utilisateur l'itinéraire optimisé ;
- des instructions de mise en oeuvre, permettant d'exécuter ladite méthode.

De manière avantageuse, l'unité de stockage est susceptible de coopérer avec des moyens de stockage amovibles, tels un CD-ROM ou DVD-ROM, etc.

Selon un mode de réalisation avantageux, le dispositif est destiné à une utilisation à bord d'un véhicule automobile.

Selon un autre mode de réalisation avantageux, les unités de stockage et de calcul sont centralisées et permettent à une pluralité de stations périphériques décentralisées d'accéder à des itinéraires optimalisés établis selon ladite méthode. Par exemple, des stations décentralisées sont susceptibles d'être reliées à l'unité centralisée via un réseau, notamment un réseau global.

La présente invention prévoit également un système informatique comprenant un dispositif tel que préalablement décrit.

La présente invention prévoit également un logiciel comprenant des éléments de code programmés pour la mise en oeuvre de la méthode préalablement décrite, lorsque ledit logiciel est chargé dans un système informatique et exécuté par ledit système informatique.

La présente invention prévoit également un logiciel sous forme de produit enregistré sur un support lisible par un système informatique, comprenant des éléments de code programmés tel qu'énoncé ci-dessus.

Tous les détails de réalisation, y compris de certaines variantes non revendiquées, sont donnés dans la description qui suit, complétée par les figures 1 à 9 où :
les figures 1 et 2 représentent schématiquement un point de départ et d'arrivée d'un itinéraire, illustrant les noeuds permettant de passer d'une première à une deuxième source de données pour un calcul optimisé d'un itinéraire global selon l'invention;
les figures 3 et 4 représentent schématiquement une série de noeuds déterminés sur la base d'un point de départ donné : sur la figure 3, les noeuds apparaissent sur une représentation typiquement de type urbain ; sur la figure 4, les noeuds apparaissent sur une représentation typiquement de type interurbain, illustrant ainsi la correspondance ou zone d'intersection entre les deux sources à la base de l'établissement d'un itinéraire ;
la figure 5 illustre la détermination d'un itinéraire de Meudon à Vélizy en partant de l'un ou l'autre des sept noeuds potentiels du tableau de la figure 5.
les figures 6 et 7 illustrent un exemple de la portion interurbaine d'un itinéraire, avec les noeuds ayant servi à établir cet itinéraire ; à la figure 6, en considérant tous les noeuds dans un rayon donné (depuis Paris) ; à la figure 7, en considérant les noeuds dans un rayon en privilégiant la direction du point d'arrivée (Toulouse) ;
la figure 8 illustre les principales étapes permettant de préparer un itinéraire optimal entre les points alpha et bêta, grâce à la méthode proposée ;
la figure 9 illustre un exemple de configuration de matériel utilisé pour un système de détermination d'itinéraire de type centralisé, accessible par un réseau public.

Dans les différentes figures, des numéros de références identiques sont utilisés afin d'identifier des éléments similaires.

Dans la présente description, les termes suivants sont utilisés notamment avec les significations suivantes :

On désigne « noeud » un point d'intersection entre un premier élément de réseau cartographique ou routier (ou autre réseau) et un second élément d'un tel réseau, notamment l'intersection entre une pluralité de voies routières. Un noeud désigne également un point de changement physique ou qualitatif d'un tronçon, comme par exemple un passage de deux à trois voies, un changement de la limitation de vitesse, une zone (même temporaire) faisant l'objet de travaux, un point de rupture tel une frontière, etc.

On désigne « tronçon », une portion de voie entre deux noeuds.

Selon un mode de réalisation préférentiel de l'invention, la méthode de calcul d'itinéraire permet d'établir un itinéraire optimisé en fonction d'au moins un critère CO entre un point α et un point β, en utilisant les données, notamment géographiques, mais éventuellement d'autres types tels que des renseignements touristiques ou routiers, des horaires, des recommandations ou conseils, etc, d'au moins deux sources distinctes. La distinction « K » entre les deux sources peut provenir de différents types d'éléments. Selon un premier exemple, elle provient du type de données géographiques contenues. Il peut alors s'agir d'une source de type urbain, qui comprend alors des données relativement détaillées et précises du réseaux routier, de la toponymie, etc, un peu à l'image d'une carte détaillée d'une ville ou d'une agglomération, que l'on qualifierait de grande échelle dans le cas d'une édition papier d'une telle carte. Il peut au contraire s'agir d'une source de type interurbain, qui comprend alors des données axées en particulier sur le réseau des routes permettant de franchir des trajets sensiblement longs, comme par exemple des trajets via un axe routier traversant une ville ou une partie d'une ville, d'un trajet interurbain via des routes nationales ou autoroutes, etc, en particulier s'il s'agit d'un trajet de plusieurs dizaines ou centaines de kilomètres. Ces données ressemblent alors à une carte d'une région, d'une province, d'un canton, voire d'un ou plusieurs pays, que l'on qualifierait de petite échelle dans le cas d'une édition papier d'une carte. Pour un tel exemple, la caractéristique K s'apparenterait à une différence « d'échelle », ou de densité d'information, ou de couverture de zone géographique, etc.

La source de distinction peut également provenir du type de sources. Par exemple, une source de données géographiques, une autre de données géologiques, ou climatiques, ou géophysiques, etc. La caractéristique K correspond alors au type principal de données d'une source.

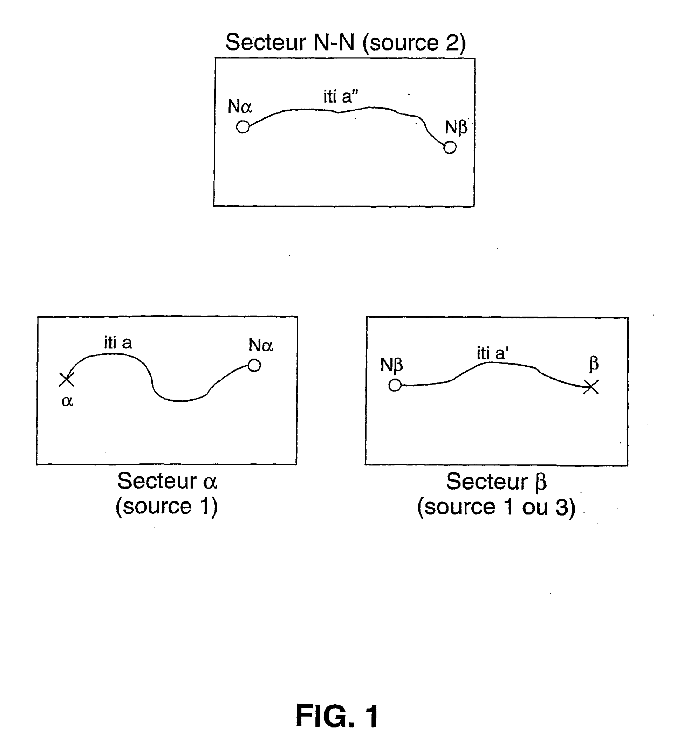

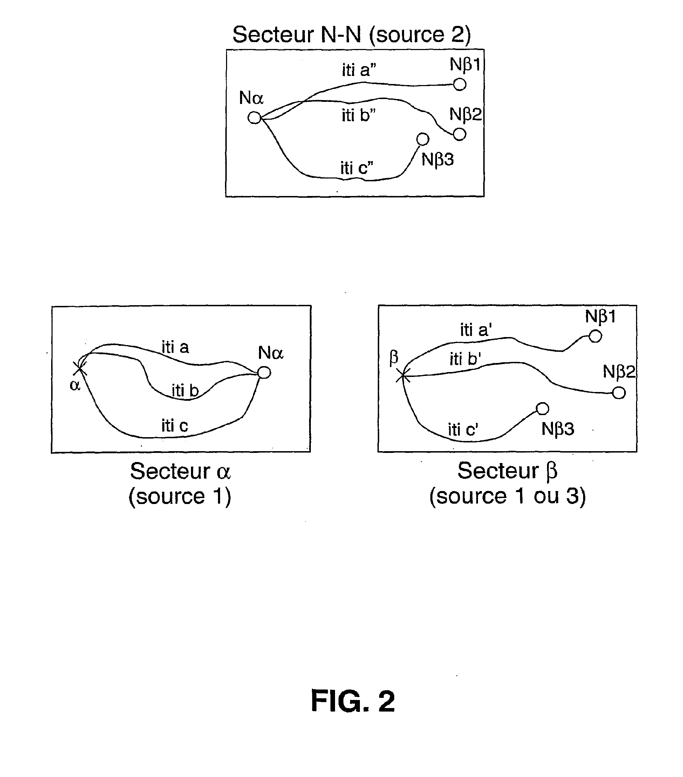

Selon un exemple de réalisation particulièrement avantageux illustré aux figures 1 et 2, on utilise deux, ou plus, sources géographiques complémentaires, dans le but d'optimiser la détermination ou la « fabrication » d'itinéraire de type principalement routier, mais pouvant comporter des tronçons piétonniers, ou ferroviaires, ou maritimes (traversier par exemple). Un itinéraire de type inter-modal peut également être établi. Un tel itinéraire peut comporter par exemple diverses portions par différents modes de transport tels que le bus, le train, l'avion, le bateaux, un véhicule automobile, à pied, etc.

Les deux ou plusieurs sources comportent de préférence une zone de chevauchement, ou zone commune, ou zone de jonction. Une telle zone permet avantageusement d'assurer une forme de continuité ou de lien entre les sources. Par exemple, dans une première source, de type urbain, on a un point α, qui pourrait correspondre à une entrée d'autoroute, près d'une zone urbaine. Dans une deuxième source, de type interurbain, on retrouve avantageusement le même point α, correspondant toujours à la même entrée d'autoroute. Le même point α signifie dans le cadre présent que chaque source dispose d'un code pour identifier une seule et même réalité physique ou géographique dans le monde réel.

En pratique, ce même point α peut soit être représenté par un seul et même code dans chacune des sources. Ce cas permet alors une gestion simple puisque le point α repéré depuis une source pourra facilement être identifié ou repéré dans une autre source. Autrement, le point α peut être représenté par des codes distincts. Il est alors souhaitable de disposer de liens entre les « différents » points α des différentes sources, afin de pouvoir aisément passer de l'un à l'autre. Soit les liens sont intégrés dans une des sources, soit ils sont intégrés dans une source indépendante. On peut ainsi avoir une base de liens entre deux ou plusieurs sources, à laquelle on se réfère en plus des sources elles-mêmes.

Par ailleurs, il peut arriver qu'un point α soit référencé dans une source, avec une forme donnée et une position donnée, qui ne sont pas forcément les mêmes dans une autre source. Les liens, ou source de liens, comportent alors de manière préférentielle, des éléments de jumelage, qui permettent d'assimiler un point d'une source à un point similaire d'une autre source (pour une même réalité géographique ou physique) et d'assurer le passage d'une source à une autre si possible sans interférence ou discontinuité. Ce passage est souvent désignés par le terme « appariement ».

Selon l'invention, et tel qu'illustré par exemple aux figures 1, 2 et 8, on détermine, à partir du point alpha et à partir de la première source, un ou plusieurs noeuds alpha (Nα). Ces noeuds sont de préférence dans le même secteur que le point alpha (α). Selon un exemple particulier, le point alpha correspond sensiblement à un noeud. Les noeuds sélectionnés peuvent être repérés ou identifiés à partir de la première ou de la deuxième source, soit, comme préalablement expliqué, en étant référencé dans les deux sources, soit grâce à un lien permettant d'établir une jonction ou lien entre les deux sources.

De préférence pour chacun des noeuds identifiés on détermine une cote ou coût en fonction d'un critère CO donné. Ce critère est commenté plus loin dans la présente description.

Le nombre des noeuds repérés dans l'environnement ou secteur du point alpha peut être arrêté suivant différentes bases. Selon un exemple de réalisation avantageux, on retient ou conserve uniquement les noeuds identifiés sans passer par un premier noeud déjà identifié. Selon cette base, on optimise les noeuds disposés à proximité immédiate du point alpha, les autres étant automatiquement non retenus.

Selon une autre base avantageuse, on retient un nombre donné de noeuds, par exemple 10 ou 15 ou 30, répartis dans le secteur du point alpha. Selon une autre base avantageuse, on retient les noeuds situés à l'intérieur d'une limite géographique donnée reliée au secteur alpha, comme par exemple les noeuds situés dans un rayon de 10 ou 20 ou 50 km autour du point alpha.

Selon l'un ou l'autre de ces modes, on peut également retenir les points du secteur alpha situés de préférence dans une direction donnée.

Ensuite, tel qu'illustré aux figures 1, 2 et 8, on procède de façon similaire avec le point bêta, pour obtenir une pluralité de noeuds bêta (Nβ), dans le secteur bêta (β). Les noeuds bêta sont de préférence référencés à la fois dans une troisième et dans la deuxième source. La troisième source peut par exemple être une source urbaine correspondant au secteur où se situe le point bêta. La troisième source peut prendre une autre forme, tel qu'énoncé précédemment. Ensuite, de manière préférentielle, comme pour les noeuds alpha, on détermine une cote pour les noeuds bêta.

Selon une variante de réalisation, la troisième source correspond sensiblement à la première source ou encore à une secteur particulier de la première source.

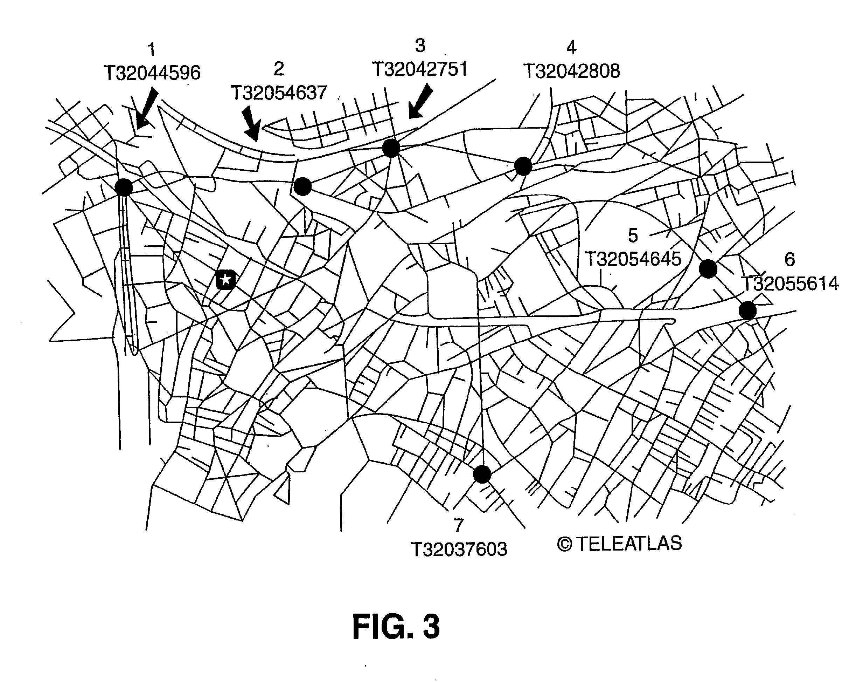

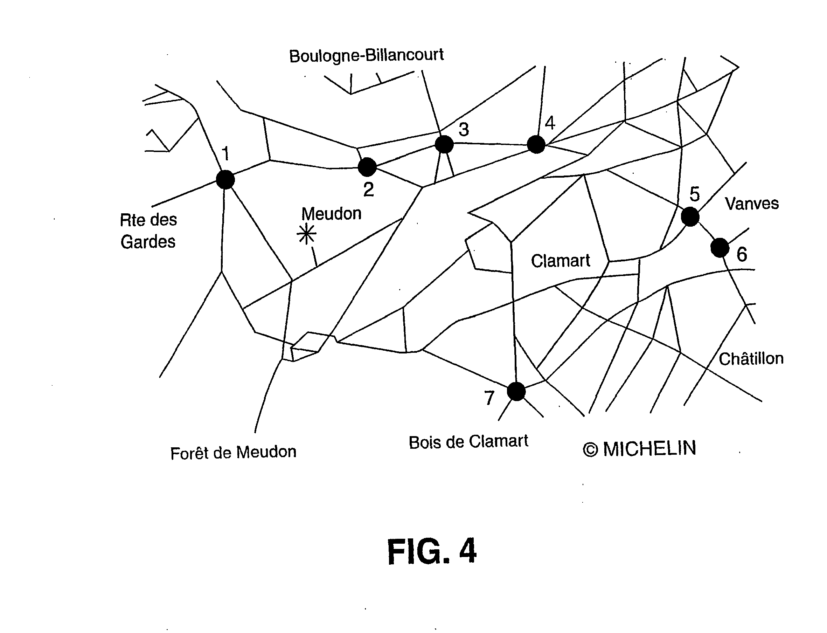

On dispose alors (voir figure 2) d'une pluralité de noeuds alpha et d'une pluralité de noeuds bêta. Les figures 3 et 4 ainsi que le tableau A ci-dessous illustrent des exemples de noeuds alpha ou bêta communs à une première source (figure 3) de type urbain ou grande échelle, et à une deuxième source (figure 4) de type interurbain ou petite échelle.

**TABLEAU A**

| Cote | (Temps) Id | Noeud | |
|---|---|---|---|
| 0:00 | * | Av. de la Paix | Meudon |
| 2:54 | 1 | Pl. du Mal Leclerc | Meudon |
| 5:45 | 2 | Vaugirard | Meudon |
| 6:27 | 3 | Pl. de la Résistance | Issy-les-Moulineaux |
| 7:03 | 4 | Pl. Léon Blum | Issy-les-Moulineaux |
| 8:22 | 5 | Pl. Marquis Pl. Marquis | Clamart |
| 11 :30 | 6 | Av. Paix ÿ Av. G. Gaule | Vanves |
| 12 :09 | 7 | Pl. du Clos Montholon | Vanves |

Dans cet exemple, la source grande échelle provient de données de TELEATLAS, tandis que la source petite échelle provient d'une source MICHELIN (base MICHELIN Europe). Le tableau A donne les détails de chacun des noeuds (par exemple des noeuds alpha ou bêta) déterminés depuis un point de départ (ou d'arrivée) *. Dans cet exemple, les cotes affectées à chaque noeud correspondent au temps de parcours depuis le point de départ vers le noeud en question. Dans ce même exemple, les noeuds 1 à 7 sont repérées ou déterminés et une cote est de préférence attribuée à chacun, tel que le montre le tableau.

Le point de départ de cet exemple se situe à Meudon (France) avenue de la Paix, identifié par un *. La cote de ce point est avantageusement à zéro. Chacun des autres noeuds a une cote distincte, en fonction, pour cet exemple, d'un temps sensiblement moyen de parcours entre le point * et le noeud. D'autres types de cotes peuvent être attribués en fonctions d'autres critères simples ou multiples, tel que décrit plus loin.

Les noeuds alpha ont une cote par rapport au point alpha ; les noeuds bêta ont une cote par rapport au point bêta.

De manière avantageuse, on établit ensuite une seconde cote, pour chaque noeud. En partant de préférence par le secteur identifié comme étant celui de départ, et en se dirigeant graduellement vers l'autre secteur (secteur d'arrivée). On détermine une cote pour chacun des noeuds, désignée ici par la cote N-N (la cote de noeud à noeud). On se trouve alors en relation avec la deuxième source, qui sert de référence pour l'établissement de ces cotes.

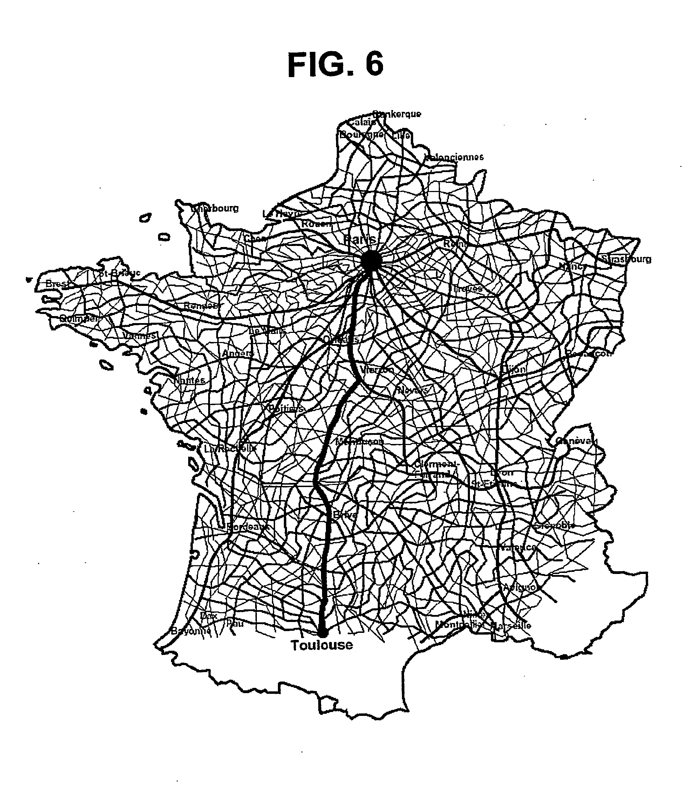

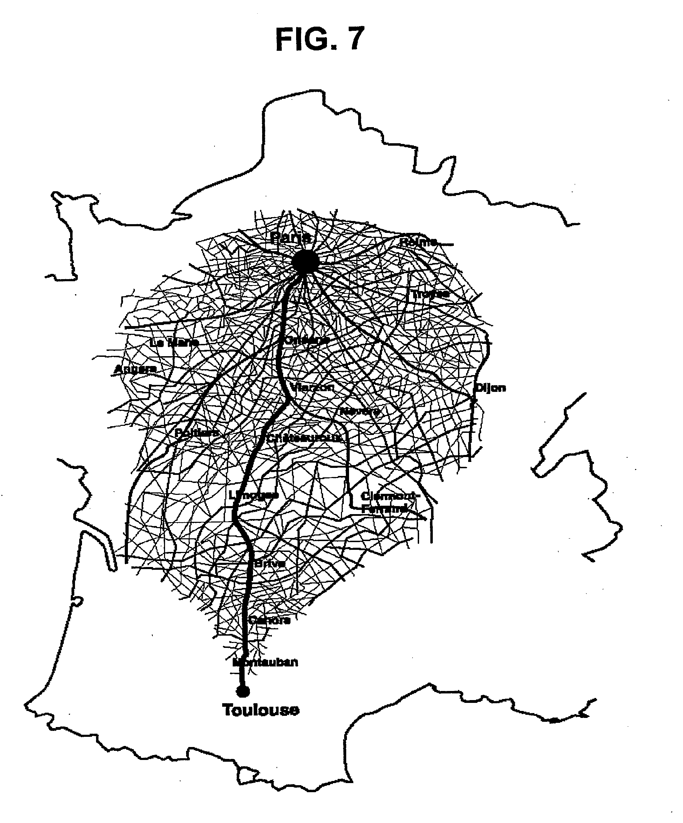

En procédant de la sorte, les noeuds près du point de départ ont une cote « faible » alors que les noeuds près du secteur d'arrivée, ont une cote « élevée ». On utilise avantageusement la méthode ou algorithme de DIJKSTRA (bien connue dans le domaine de la détermination d'itinéraires ou du plus court chemin) pour établir les cotes d'une part, et retracer l'itinéraire résultant d'autre part. La détermination de noeuds suivant cette méthode est présentée plus loin dans la description et illustrée aux figures 6 et 7.

L'itinéraire résultant correspond de préférence à celui passant par les noeuds ayant permis de valoriser de façon optimale un noeud du secteur d'arrivée. En général, il s'agit du noeud ayant la cote la plus faible. Selon un autre mode d'établissement des cotes, il peut aussi s'agir de la cote la plus élevée. Ce noeud est désigné « noeud élu ».

Selon un mode de réalisation préférentiel de l'invention, la cote optimale, pour chaque secteur, est établie en considérant d'une part la cote du secteur alpha ou bêta, établie par exemple en début de procédé, et d'autre part, de la cote du secteur noeud à noeud, correspondant par exemple à un secteur interurbain. Ainsi, pour le secteur d'arrivée bêta, on additionne les cotes N-N et les cotes secteur bêta pour chaque noeud. Le noeud dont la cote globale résultante est optimale est de préférence utilisé. On fait de même dans le secteur de départ, en combinant les cotes du secteur alpha à celles du secteur N-N. On élit le noeud ayant la cote optimale.

L'itinéraire global résultant passe par les noeuds élus des secteurs départ et arrivée, ainsi que tous les noeuds du secteur N-N ayant permis l'optimisation des cotes.

Selon une variante de réalisation, le point de départ est le point bêta, et le point d'arrivée est le point alpha.

Selon une autre variante de réalisation, la cote d'au moins un des noeuds élu des secteurs alpha et/ou bêta n'est pas considérée pour établir l'itinéraire global. On privilégie dans un tel cas la portion d'itinéraire de noeud à noeud.

Selon une autre variante, on établit un itinéraire alpha optimisé ou non du point alpha vers un noeud alpha, on fait de même pour un itinéraire bêta du point bêta vers un noeud bêta, et on établit un itinéraire de noeud à noeud pour le secteur N-N.

On a alors un itinéraire optimisé seulement sur une section du parcours, ou pas optimisé du tout La méthode comprend toutefois les différentes étapes où l'on se réfère à au moins deux sources distinctes. Il peut en effet se produire que pour certains types d'itinéraires, le besoin d'optimisation soit secondaire, ou qu'on laisse le choix à l'utilisateur entre plusieurs itinéraires non optimisés.

Selon un mode de réalisation préférentiel de l'invention, les informations concernant l'itinéraire établi sont présentées à un utilisateur sous la forme d'une liste d'instructions codées, notamment écrites, tel qu'illustré au tableau B ci-dessous.

**TABLEAU B**

| Liste des instructions (Feuille de route) : |
|---|
| Départ pas à pas : |
| Départ Av. de la Paix |
| Prendre à droite Rue des Bigots sur 115 m |
| Prendre à gauche Rue des Jardies sur 130 m |
| Prendre à droite Place Stalingrad sur 25 m |
| Prendre à droite Boulevard Verd de Saint-Julien sur 415 m |
| Prendre à gauche Place du Maréchal Leclerc sur 80 m |
| Prendre Route des Gardes sur 515 m |
| Prendre Route du Pavé des Gardes sur 1050 m |
| |

| Trajet : |
|---|
| Prendre N118 direction Orléans sur 1,4 km |
| Prendre Sortie 3, Meudon-la-Forêt |
| Vélizy Zone d'emplois |
| Centre commercial Régional |
| Vélizy-Villacoublay sur 2,8 km |

La première partie des instructions (partie supérieure) correspond sensiblement à la portion urbaine de l'itinéraire. Les détails donnés sont très précis et permettent de diriger le véhicule aisément même à travers un réseau routier très dense.

Ce tableau illustre un exemple permettant de donner ou transmettre des instructions à l'utilisateur. De multiples autres façons peuvent également être utilisées. Ainsi par exemple, on peut préciser le temps de parcours pour un tronçon, ou entre deux indications de changement de route. On peut par ailleurs utiliser des symboles ou pictogrammes, tels des flèches, etc. Selon une autre variante, on peut transmettre les indications au conducteur, sur route, dans son véhicule, à l'aide d'un dispositif de reconstitution vocale.

La partie inférieure du tableau B illustre la portion de trajet de type interurbain ou « petite échelle ». Les instructions données sont avantageusement plus succintes et prennent la forme par exemple de directions à suivre, de numéros (ou nom) de route, de numéro (ou nom) de sortie, etc. De manière avantageuse, les instructions données prennent en compte les indications des panneaux routiers que le conducteur peut visualiser et suivre une fois sur place avec le véhicule.

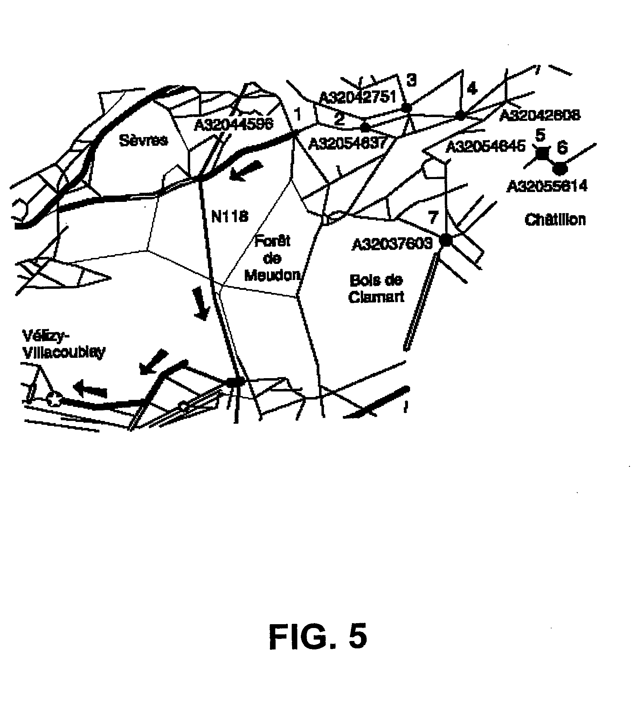

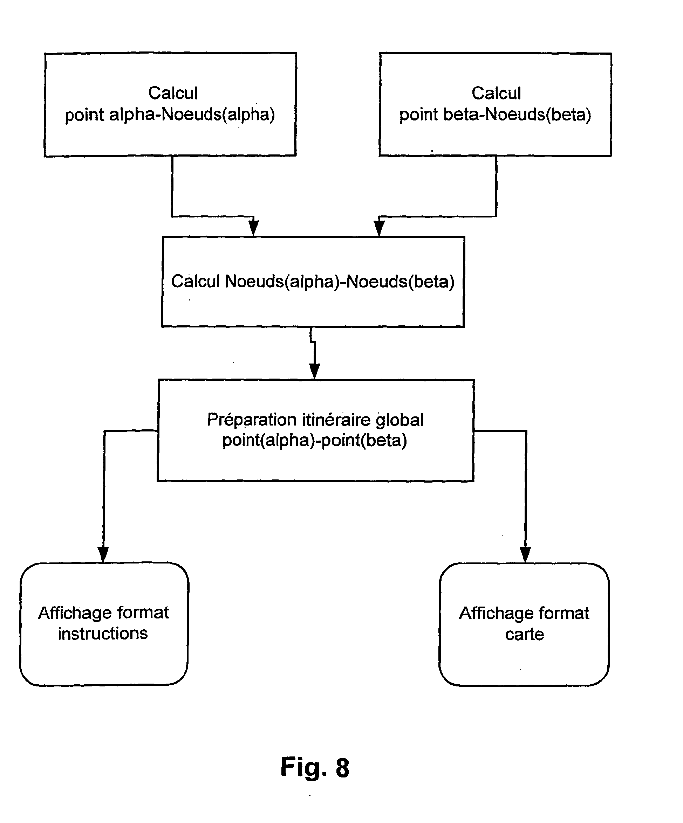

L'exemple de la figure 8 est dressé à partir du même point de départ que pour les figures 3 et 4, avec une arrivée à Vélizy-Villacoublay. Le noeud 1 est élu dans le secteur de départ (secteur alpha). L'itinéraire élu est indiqué en trait gras et fléché à la figure 5.

Selon une variante de réalisation, les informations concernant l'itinéraire établi sont présentées à un utilisateur sous la forme d'une représentation géographique, notamment une carte routière, sur laquelle l'itinéraire est mis en évidence.

Le critère d'optimisation CO permet de paramétrer ou d'affecter selon certains choix le mode d'attribution des cotes. Cette cote d'optimisation CO d'un noeud ou d'un itinéraire est établie en fonction d'au moins un critère CRI. Selon un mode de réalisation, les critères CRI sont pré-établis, et par exemple à sélectionner par l'utilisateur parmi une liste. Voici quelques exemples de critères CRI particulièrement avantageux que l'utilisateur peut considérer pour déterminer un itinéraire :
- déterminer l'itinéraire sensiblement le plus court entre alpha et bêta ;
- déterminer l'itinéraire sensiblement le plus rapide entre alpha et bêta ;
- déterminer l'itinéraire proposant un compromis distance/temps ;
- déterminer l'itinéraire favorisant sensiblement l'utilisation de l'autoroute entre alpha et bêta ;
- déterminer l'itinéraire évitant sensiblement l'utilisation de l'autoroute entre alpha et bêta ;
- déterminer l'itinéraire sensiblement le moins cher en péage ;
- déterminer un itinéraire comportant une cote d'agrément la plus élevée possible ;
- déterminer un itinéraire sensiblement peu achalandé ;
- déterminer un itinéraire sans sortir des frontières par exemple d'un pays donné ;
- déterminer un itinéraire favorisant au moins un point de passage souhaité (tel que hôtel, restaurant, station d'essence ou station service, site touristique, etc).

Le critère CO peut donc avantageusement prendre en compte plusieurs éléments, éventuellement en pondérant l'importance de chacun d'entre eux.

Selon un autre mode de réalisation, les critères CRI sont définis par l'utilisateur. Il peut alors s'agir de critères similaires à ceux déjà donnés à titre d'exemple, ou encore d'autres types de critères, pouvant être plus personnalisés:

Les figures 6 et 7 illustrent des exemples de réalisation d'itinéraire (pour une portion de trajet interurbain, à partir d'une source de type interurbain) sur la base d'outils utilisant l'algorithme de DIJKSTRA, de préférence modifié. A la figure 6, pour un itinéraire de Paris vers Toulouse, les noeuds sont déterminés, depuis le noeud d'origine, en région parisienne, dans toutes les directions potentielles. Lorsque les noeuds situés dans le secteur du point d'arrivée toulousain sont déterminés, et qu'une cote est affecté à chaque noeud, il est alors possible d'élire les noeuds optimum au départ et à l'arrivée. L'itinéraire résultant, tel qu'illustré, passe par les noeuds ayant permis l'obtention des noeuds optimum.

La figure 7 illustre une variante selon laquelle les noeuds sont déterminés en privilégiant la direction vers le secteur d'arrivée. Les noeuds déterminés forment alors une sorte de goutte d'eau, orientée vers le point d'arrivée. Dès lors qu'un nouveau noeud ne permet pas d'optimiser la cote entre ce noeud et le point d'arrivée par rapport à d'autres noeuds déjà connus, on ne le retient de préférence pas.

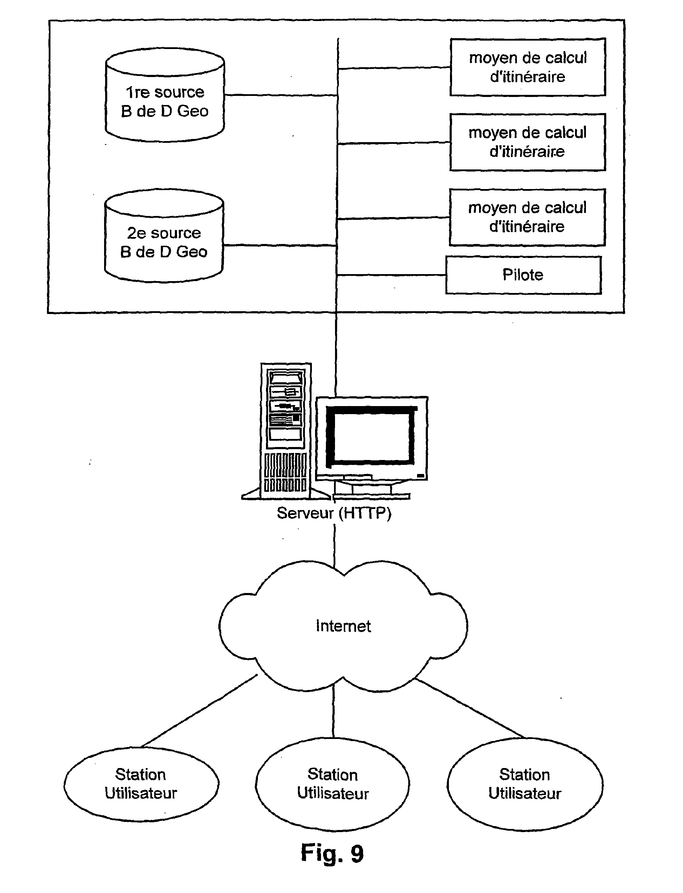

La figure 9 illustre un exemple de configuration de matériel susceptible d'être utilisé dans le cadre de l'invention. Une ou plusieurs bases de données DB contiennent les données géographiques des différentes sources. Un ou plusieurs moyens de calcul permettent d'effectuer les opérations nécessaires à l'élaboration d'itinéraires. Un pilote est avantageusement utilisé pour synchroniser les opérations. Un serveur permet de relier le système centralisé à une pluralité d'utilisateur par l'entremise d'un réseau, comme par exemple Internet.

Selon diverses variantes avantageuses, la méthode selon l'invention peut également être utilisée avec d'autres données de départ que les seuls noeuds. Par exemple, on peut utiliser des noeuds et/ou des tronçons orientés.

## Revendications

1. Méthode de calcul d'itinéraire permettant d'établir à l'aide d'un calculateur un itinéraire optimisé en fonction d'au moins un critère CO entre un point alpha et un second point bêta, consistant à utiliser les données numérisées, notamment géographiques, d'au moins une première et une deuxième sources stockées sur au moins un support mémoire et comportant un ensemble de noeuds communs, la deuxième source étant distincte de la première par au moins une caractéristique K et consistant à :
a) déterminer, à partir du point alpha et à partir de ladite première source, une pluralité de noeuds alpha (Nα), sensiblement voisins dudit point alpha, référencés à la fois dans la première et dans la deuxième sources et déterminer une première cote d'optimisation pour chacun des noeuds en fonction des données de la première source et d'un critère CO donné ;
b) déterminer, à partir du point bêta et à partir d'une troisième source, une pluralité de noeuds bêta (Nβ), sensiblement voisins dudit point bêta, référencés à la fois dans la troisième et dans la deuxième sources et déterminer une cote première d'optimisation pour chacun des noeuds, en fonction des données de la troisième source et d'un critère CO donné ;
c) déterminer, à partir des données de la deuxième source et d'un critère CO donné, pour l'ensemble des couples de noeuds Nα et de noeuds Nβ, une seconde cote d'optimisation de chacun des couples de noeuds (Nα, Nβ) ;
d) déterminer, en fonction desdites cotes d'optimisation, pour l'ensemble de l'itinéraire alpha-bêta, les noeuds optimum permettant d'optimiser un itinéraire global du point alpha au point bêta.

2. Méthode de détermination d'itinéraire selon la revendication 1, dans laquelle la caractéristique K de distinction des sources est fonction des informations contenues dans chacune des sources.

3. Méthode de détermination d'itinéraire selon l'une des revendications 1 ou 2, dans laquelle les étapes c et d sont successivement réalisées une fois les étapes a et b complétées.

4. Méthode de détermination d'itinéraire selon l'une des revendications 1 à 3, dans laquelle la première source est de type urbaine et la deuxième source est de type interurbaine.

5. Méthode de détermination d'itinéraire selon l'une des revendications précédentes, dans laquelle la troisième source est de type urbaine.

6. Méthode de détermination d'itinéraire selon l'une des revendications précédentes, dans laquelle ledit ensemble de noeuds communs résulte d'une étape antérieure d'appariement, dans laquelle certains noeuds identifiés dans plus d'une source ont été associés entre eux.

7. Méthode de détermination d'itinéraire selon l'une des revendications précédentes, dans laquelle le point alpha est le point de départ de l'itinéraire et le point bêta est le point d'arrivée de l'itinéraire.

8. Méthode de détermination d'itinéraire selon l'une des revendications précédentes, dans laquelle la troisième source correspond sensiblement à la première source.

9. Méthode de détermination d'itinéraire selon l'une des revendications précédentes, dans laquelle la troisième source correspond sensiblement à un secteur limité de la première source.

10. Méthode de détermination d'itinéraire selon l'une des revendications précédentes, dans laquelle le noeud alpha correspond au point alpha.

11. Méthode de détermination d'itinéraire selon l'une des revendications précédentes, dans laquelle le noeud bêta correspond au point bêta.

12. Méthode de détermination d'itinéraire selon l'une des revendications précédentes, dans laquelle les premières et secondes cotes d'optimisation desdits noeuds (Nα, Nβ) sont déterminées à partir d'un algorithme dérivé de DIJKSTRA.

13. Méthode de détermination d'itinéraire selon l'une des revendications précédentes, dans laquelle la cote d'optimisation CO d'un noeud ou d'un itinéraire est établie en fonction d'au moins un critère CRI.

14. Méthode de détermination d'itinéraire selon l'une des revendications précédentes, dans laquelle les critères CRI sont à sélectionner par l'utilisateur parmi une liste pré-établie comprenant:
• CRI1 vise à déterminer l'itinéraire sensiblement le plus court entre alpha et bêta ;
• CRI2 vise à déterminer l'itinéraire sensiblement le plus rapide entre alpha et bêta ;
• CRI3 vise à déterminer l'itinéraire favorisant sensiblement l'utilisation de l'autoroute entre alpha et bêta ;
• CRI4 vise à déterminer l'itinéraire évitant sensiblement l'utilisation de l'autoroute entre alpha et bêta ;
• CRI5 vise à déterminer l'itinéraire sensiblement le moins cher en péage ;
• CRI6 vise à déterminer un itinéraire comportant une cote d'agrément la plus élevée possible ;
• CRI7 vise à déterminer un itinéraire sensiblement peu achalandé ;
• CRI8 vise à déterminer un itinéraire favorisant au moins un point de passage souhaité.

15. Dispositif pour la mise en oeuvre de la méthode selon l'une des revendications précédentes, comportant :
au moins une unité de stockage, permettant d'accéder aux données de la première et de la deuxième source ;
au moins une unité de calcul, permettant l'élaboration d'un itinéraire optimisé ;
au moins un moyen d'affichage, permettant de présenter à l'utilisateur l'itinéraire optimisé ;
des instructions de mise en oeuvre, permettant d'exécuter ladite méthode.

16. Dispositif selon la revendication 15, destiné à une utilisation à bord d'un véhicule automobile.

17. Dispositif selon la revendication 15, dans lequel les unités de stockage et de calcul sont centralisées et permettent à une pluralité de stations périphériques décentralisées d'accéder à des itinéraires optimisés établis selon ladite méthode.

18. Dispositif selon la revendication 17, dans lequel des stations décentralisées sont susceptibles d'être reliées à l'unité centralisée via un réseau, notamment un réseau global.

19. Système informatique comprenant un dispositif selon la revendication 15.

20. Logiciel comprenant des éléments de code programmés pour la mise en oeuvre de la méthode selon l'une des revendications 1 à 14, lorsque ledit logiciel est chargé dans un système informatique et exécuté par ledit système informatique.

21. Logiciel sous forme de produit enregistré sur un support lisible par un système informatique, comprenant des éléments de code programmés selon la revendication 20.

## Claims

1. A route calculation method allowing an optimised route to be drawn up by means of a calculator as a function of at least one criterion CO between a point alpha and a second point beta, comprising the use of digitised, in particular geographical, data from at least a first and a second sources stored on at least one storage medium and comprising a set of common nodes, the second source differing from the first by at least one characteristic K, and comprising the following steps:
a) determining, from the point alpha and from said first source, a plurality of alpha nodes (Nα), substantially adjacent said point alpha, referenced in both the first and the second sources, and determining a first optimisation value for each of the nodes as a function of the data from the first source and a given criterion CO;
b) determining, from the point beta and from a third source, a plurality of beta nodes (Nβ), substantially adjacent said point beta, referenced in both the third and the second sources, and determining a first optimisation value for each of the nodes as a function of the data from the third source and a given criterion CO;
c) determining, from the data from the second source and a given criterion CO, for all the pairs of nodes Nα and Nβ, a second optimisation value for each of the pairs of nodes (Nα, Nβ) ;
d) determining, for the set of alpha-beta route, the optimum nodes allowing optimisation of an overall route from the point alpha to the point beta.

2. A route calculation method according to claim 1, in which the characteristic K distinguishing the sources is a function of the information contained in each of the sources.

3. A route calculation method according to one of claims 1 or 2, in which steps c and d are performed in succession once steps a and b have been completed.

4. A route calculation method according to one of claims 1 to 3, in which the first source is of the urban type and the second source is of the interurban type.

5. A route calculation method according to one of the preceding claims, in which the third source is of the urban type.

6. A route calculation method according to one of the preceding claims, in which said set of common nodes results from a previous matching step, in which certain nodes identified in more than one source have been linked together.

7. A route calculation method according to one of the preceding claims, in which the point alpha is for example the starting point of the route, and the point beta is the destination of the route.

8. A route calculation method according to one of the preceding claims, in which the third source corresponds substantially to the first source.

9. A route calculation method according to one of the preceding claims, in which the third source corresponds substantially to a limited sector of the first source.

10. A route calculation method according to one of the preceding claims, in which the alpha node corresponds to the point alpha.

11. A route calculation method according to one of the preceding claims, in which the beta node corresponds to the point beta.

12. A route calculation method according to one of the preceding claims, in which the first and second optimisation values of said nodes (Nα, Nβ) are determined on the basis of an algorithm derived from DIJKSTRA.

13. A route calculation method according to one of the preceding claims, in which the optimisation value CO of a node or a route is established as a function of at least one criterion CRI.

14. A route calculation method according to one of the preceding claims, in which the criteria CRI may be selected by the user from a pre-established list, comprising:
• CRI1, which aims to determine the substantially shortest route between alpha and beta;
• CRI2, which aims to determine the substantially fastest route between alpha and beta;
• CR13, which aims to determine the route which essentially gives priority to use of the motorway between alpha and beta;
• CR14, which aims to determine the route which essentially avoids use of the motorway between alpha and beta;
• CRI5, which aims to determine the substantially cheapest route with regard to tolls;
• CRI6, which aims to determine the most pleasant route;
• CRI7, which aims to determine the essentially least busy route;
• CRI8, which aims to determine a route which passes at least one desired point.

15. A device for implementing the method according to one of the preceding claims, comprising:
at least one storage unit, allowing access to data from the first and second sources;
at least one calculating unit, allowing the generation of an optimised route;
at least one display means, allowing the optimised route to be presented to the user;
implementation instructions, allowing said method to be executed.

16. A device according to claim 15, intended for use on board a motor vehicle.

17. A device according to claim 15, in which the storage and calculation units are centralised and allow a number of decentralised peripheral stations to access optimised routes drawn up according to said method.

18. A device according to claim 17, in which decentralised stations are capable of being connected to the centralised unit via a network, in particular a global network.

19. A computer system comprising a device according to claim 15.

20. Software comprising programmed code elements for implementing the method according to one of claims 1 to 14, when said software is loaded onto a computer system and executed by said computer system.

21. Software in the form of a product recorded on a medium readable by a computer system, comprising programmed code elements according to claim 20.

## Patentansprüche

1. Verfahren zur Wegstreckenberechnung, das es ermöglicht, mit Hilfe eines Rechners in Abhängigkeit von mindestens einem Kriterium CO zwischen einem Punkt Alpha und einem zweiten Punkt Beta eine optimierte Wegstrecke zu erstellen, das darin besteht, die digitalisierten, insbesondere geographischen Daten mindestens einer ersten und einer zweiten Quelle zu verwenden, die auf mindestens einem Speicherträger gespeichert sind und eine Einheit von gemeinsamen Knoten aufweisen, wobei die zweite Quelle sich von der ersten durch mindestens ein Merkmal K unterscheidet, und das darin besteht:
a) ausgehend vom Punkt Alpha und ausgehend von der ersten Quelle mehrere Knoten Alpha (Nα) zu bestimmen, die dem Punkt Alpha im Wesentlichen benachbart und sowohl in der ersten als auch in der zweiten Quelle bezeichnet sind, und eine erste Optimierungsmaßzahl für jeden der Knoten in Abhängigkeit von den Daten der ersten Quelle und von einem gegebenen Kriterium CO zu bestimmen;
b) ausgehend vom Punkt Beta und ausgehend von einer dritten Quelle mehrere Knoten Beta (Nβ) zu bestimmen, die dem Punkt Beta im Wesentlichen benachbart und sowohl in der dritten als auch in der zweiten Quelle bezeichnet sind, und eine erste Optimierungsmaßzahl für jeden der Knoten in Abhängigkeit von der dritten Quelle und von einem gegebenen Kriterium CO zu bestimmen;
c) ausgehend von den Daten der zweiten Quelle und von einem gegebenen Kriterium CO für die Gesamtheit der Paare von Knoten Nα und von Knoten Nβ eine zweite Optimierungsmaßzahl jedes der Knotenpaare (Nα, Nβ) zu bestimmen,
d) in Abhängigkeit von den Optimierungsmaßzahlen für die Gesamtheit der Wegstrecke Alpha-Beta die optimalen Knoten zu bestimmen, die es ermöglichen, eine globale Wegstrecke vom Punkt Alpha zum Punkt Beta zu optimieren.

2. Wegstreckenbestimmungsverfahren nach Anspruch 1, bei dem das Merkmal K zur Unterscheidung der Quellen von den in jeder der Quellen enthaltenen Informationen abhängt.

3. Wegstreckenbestimmungsverfahren nach einem der Ansprüche 1 oder 2, bei dem die Schritte c und d nacheinander durchgeführt werden, sobald die Schritte a und b fertig gestellt sind.

4. Wegstreckenbestimmungsverfahren nach einem der Ansprüche 1 bis 3, bei dem die erste Quelle vom Stadttyp und die zweite Quelle vom Überlandtyp ist.

5. Wegstreckenbestimmungsverfahren nach einem der vorhergehenden Ansprüche, bei dem die dritte Quelle vom Stadttyp ist.

6. Wegstreckenbestimmungsverfahren nach einem der vorhergehenden Ansprüche, bei dem die Einheit von gemeinsamen Knoten aus einem vorhergehenden Schritt der Paarbildung resultiert, in dem bestimmte, in mehr als einer Quelle identifizierte Knoten miteinander verbunden worden sind.

7. Wegstreckenbestimmungsverfahren nach einem der vorhergehenden Ansprüche, bei dem der Punkt Alpha der Ausgangspunkt der Wegstrecke und der Punkt Beta der Ankunftspunkt der Wegstrecke ist.

8. Wegstreckenbestimmungsverfahren nach einem der vorhergehenden Ansprüche, bei dem die dritte Quelle im Wesentlichen der ersten Quelle entspricht.

9. Wegstreckenbestimmungsverfahren nach einem der vorhergehenden Ansprüche, bei dem die dritte Quelle im Wesentlichen einem begrenzten Sektor der ersten Quelle entspricht.

10. Wegstreckenbestimmungsverfahren nach einem der vorhergehenden Ansprüche, bei dem der Knoten Alpha dem Punkt Alpha entspricht.

11. Wegstreckenbestimmungsverfahren nach einem der vorhergehenden Ansprüche, bei dem der Knoten Beta dem Punkt Beta entspricht.

12. Wegstreckenbestimmungsverfahren nach einem der vorhergehenden Ansprüche, bei dem die ersten und die zweiten Optimierungsmaßzahlen der Knoten (Nα, Nβ) ausgehend von einem abgeleiteten Dijkstra-Algorithmus bestimmt werden.

13. Wegstreckenbestimmungsverfahren nach einem der vorhergehenden Ansprüche, bei dem die Optimierungsmaßzahl CO eines Knotens oder einer Wegstrecke in Abhängigkeit von mindestens einem Kriterium CRI erstellt wird.

14. Wegstreckenbestimmungsverfahren nach einem der vorhergehenden Ansprüche, bei dem die Kriterien CRI vom Benutzer aus einer vorab erstellten Liste auszuwählen sind, die enthält:
• CRI1 betrifft die Bestimmung der im Wesentlichen kürzesten Wegstrecke zwischen Alpha und Beta;
• CRI2 betrifft die Bestimmung der im Wesentlichen schnellsten Wegstrecke zwischen Alpha und Beta;
• CRI3 betrifft die Bestimmung der Wegstrecke, die im Wesentlichen die Nutzung der Autobahn zwischen Alpha und Beta begünstigt;
• CRI4 betrifft die Bestimmung der Wegstrecke, die im Wesentlichen die Benutzung der Autobahn zwischen Alpha und Beta vermeidet;
• CRI5 betrifft die Bestimmung der Wegstrecke mit den im Wesentlichen geringsten Mautkosten;
• CRI6 betrifft die Bestimmung einer Wegstrecke, die ein größtmögliches Maß an Annehmlichkeiten aufweist;
• CRI7 betrifft die Bestimmung einer Wegstrecke, die im Wesentlichen wenig Auswahl bietet;
• CRI8 betrifft die Bestimmung einer Wegstrecke, die mindestens einen gewünschten Durchgangspunkt begünstigt.

15. Vorrichtung zur Anwendung des Verfahrens nach einem der vorhergehenden Ansprüche, die aufweist:
mindestens eine Speichereinheit, die es ermöglicht, auf die Daten der ersten und der zweiten Quelle zuzugreifen;
mindestens eine Recheneinheit, die die Erarbeitung einer optimierten Wegstrecke erlaubt;
mindestens eine Anzeigeeinrichtung, die es erlaubt, dem Benutzer die optimierte Wegstrecke anzuzeigen;
Durchführungsanweisungen, die die Ausführung des Verfahrens ermöglichen.

16. Vorrichtung nach Anspruch 15, die für eine Verwendung an Bord eines Kraftfahrzeugs bestimmt ist.

17. Vorrichtung nach Anspruch 15, bei der die Speicher- und Recheneinheiten zentralisiert sind und es mehreren dezentralisierten Peripheriestationen erlauben, auf gemäß dem Verfahren erstellte optimierte Wegstrecken zuzugreifen.

18. Vorrichtung nach Anspruch 17, bei dem dezentralisierte Stationen mit der zentralisierten Einheit über ein Netz, insbesondere ein globales Netz, verbunden werden können.

19. EDV-System, das eine Vorrichtung nach Anspruch 15 enthält.

20. Software, die programmierte Codeelemente für die Durchführung des Verfahrens nach einem der Ansprüche 1 bis 14 enthält, wenn die Software in ein EDV-System geladen ist und vom EDV-System ausgeführt wird.

21. Software in Form eines auf einem von einem EDV-System lesbaren Träger gespeicherten Produkts, die programmierte Codeelemente nach Anspruch 20 enthält.
